(19) Europäisches Patentamt / European Patent Office / Office européen des brevets

(11) EP 2 796 841 B1

(12) **EUROPEAN PATENT SPECIFICATION**

(45) Date of publication and mention
of the grant of the patent:
**01.02.2017  Bulletin 2017/05**

(51) Int Cl.:
*G01K 1/20* *(2006.01)*        *G01K 7/42* *(2006.01)*

(21) Application number: **13405050.9**

(22) Date of filing: **25.04.2013**

(54) **Dynamic compensation of a sensor in a mobile device**

Dynamische Kompensierung eines Sensors in einem mobilen Gerät

compensation dynamique d'un sensor dans un terminal mobile

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.10.2014  Bulletin 2014/44**

(73) Proprietor: **Sensirion AG
8712 Stäfa (CH)**

(72) Inventors:
 • **Niederberger, Dominik
  8055 Zürich (CH)**

 • **Sacchetti, Andrea
  8051 Zürich (CH)**
 • **Böni, Dominic
  8157 Dielsdorf (CH)**

(74) Representative: **Mirza, Akram Karim
 E. Blum & Co. AG
 Vorderberg 11
 8044 Zürich (CH)**

(56) References cited:
  **EP-A1- 1 301 014       EP-A1- 2 392 898
  JP-A- 2006 105 870**

## Description

Technical Field

The present invention relates to a portable electronic device including an integrated temperature sensor and a method for measuring the temperature using such a device.

Background of the invention

It is known for example from the co-owned published United States patent application no. 2011/0307208 A1 that sensors respond to a sudden change with a change determined not only by the change itself but also by their own response function. This is especially problematic for sensors integrated into a portable electronic device. Depending on the actions and displacement of a user, e.g. the stepping into or outside a climatized house, a temperature sensor integrated for example into a mobile communication device can be exposed to an almost instantaneous step change in the ambient temperature, to which the output of the sensor react typically with a delay.

EP 1 301 014 A1, EP 2 392 898 A1 and JP 2006 105870 A represent additional documents of the art.

In applications which are not time sensitive, it is possible to wait until the sensor is again in an equilibrium with the ambient conditions before an actual sensor reading is made and displayed to the user.

However in order to react faster to an attempted measurement request by a user, sensors can be dynamically compensated. As described for example in the '208 application, a dynamically compensated sensor provides a response which adapts faster to the actual ambient condition than the sensor output. In general terms, the dynamically compensated signal is the output of a model of the sensor which is designed to reduce the difference between the measured sensor output and the actual ambient condition.

It is of course the aim of a dynamic compensator to provide a model response which is as close as possible to the real response of the sensor. Therefore it is seen as an object of the invention to improve the dynamic compensation of a sensor, particularly a temperature sensor, in a portable electronic device.

Summary of the Invention

In accordance with an aspect of the invention there is provided a portable electronic device with one or more integrated temperature sensors for measuring an ambient temperature, a dynamic compensator for reducing the difference between a sensor output in response to a change in the ambient temperature based on a response function of the sensor, wherein the dynamic compensator changes depending on temperature changes between at least two dynamic compensation modes based on different response functions.

In a preferred embodiment the at least two dynamic compensation modes based on different response functions reflect a change in the way the device with the integrated temperature sensor establishes an equilibrium with the ambient temperature in the presence of an internal heat source within the device. In a preferred variant of the invention the device includes a heat compensation system to compensate for the offset between the temperature as measured by the integrated temperature sensor and the ambient temperature. It is found that the compensation signal as generated by the heat compensation system can provide a condition for selecting between the different dynamic compensation modes.

In particular whether difference between the measured and the heat compensated signal grows or shrinks (by a predefined amount) can be used to select one of the at least two dynamic compensation modes. Alternatively, a change in the sign of the difference between the measured and the heat compensated signal can be used to select one of the at least two dynamic compensation modes.

The portable electronic device can be a mobile phone, a handheld computer, an electronic reader, a tablet computer, a game controller, a pointing device, a photo or a video camera, a digital music player, a wrist watch, a key fob, a head set, a digital photo frame and a computer peripheral.

Other advantageous embodiments are listed in the dependent claims as well as in the description below. The described embodiments similarly pertain to the device, the method, and any computer program elements. Synergetic effects may arise from different combinations of the embodiments although they might not be described in detail.

Further on it shall be noted that all embodiments of the present invention concerning a method might be carried out in the order of the steps as described. Nevertheless this has not to be the only essential order of steps but all different orders of the method steps where technically feasible shall be comprised in the scope of the claims and be disclosed by the method claims.

Brief Description of the Drawings

The detailed description refers to examples of the present invention making reference to the annexed drawings, wherein:

FIG. 1A is a perspective view of a portable electronic device;

FIG. 1B is a schematic view into part of the housing of the device of Fig. 1A;

FIG. 2 is a block diagram with components of a portable device in accordance with an example of the invention;

FIG. 3 shows an overview of heat flows determining the temperature at the temperature sensor

FIG. 4 is a simulation of the performance of two different dynamic compensator system in response to a step change in ambient temperature; and

FIGs. 5 are block diagrams illustrating elements of dynamically compensated temperature measurements in accordance with examples of the invention.

Detailed Description

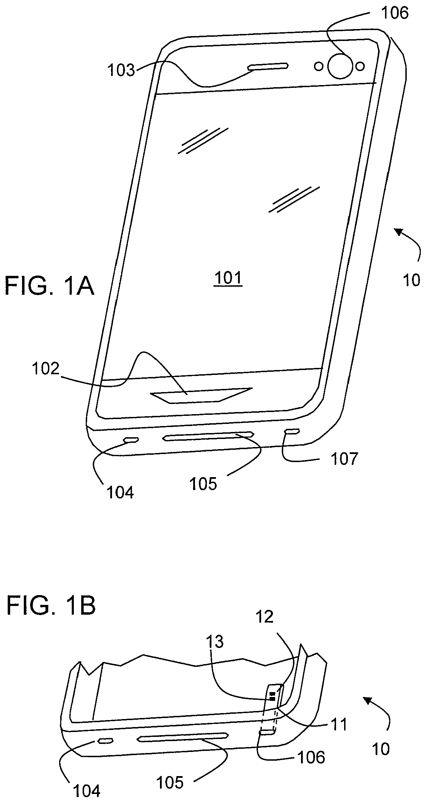

The device of FIG. 1A is a portable electronic device such as a mobile phone. The housing 10 of the mobile phone includes a front side with a screen 101 and elements like buttons 102 to let a user interact with the phone. Also shown on the front side is an opening 103 for a loudspeaker. Further openings 104,105 are located at a lower side wall of the housing 10. It is well known to mount components like microphones and loudspeakers behind such openings. The phone includes one or two cameras 106, and internally additional sensors (not shown) such as location sensors or GPS, and acceleration and orientation sensors in a manner well known.

Another opening 107 is located at the lower side wall. As shown in FIG. 1B the opening 107 is linked to a tubular duct 11 passing through the interior of the housing. A temperature sensor 12 and a humidity sensor 13 are both mounted along the duct 11 such that the sensitive areas of both sensors are exposed to the ambient air through the opening 107. Suitable sensors are commercially available for example from Sensirion™ AG under the tradenames SHTC1 or STS21 (as temperature only sensor). The actual size and shape of the duct 11 depends on the volume available and the nature of the temperature sensor 12 and the humidity sensor 13 can vary, but given the physical constraints of portable mobile devices the area of the opening is typically in the range of less than 10 square millimeters and in the present example actually about less than 3.1 square millimeters.

A temperature sensor can also be mounted in a duct separate from the humidity sensor or flush with the housing of the phone.

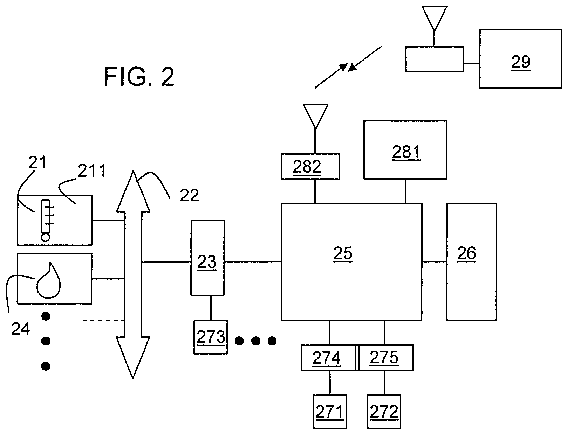

Fig. 2 shows a block diagram with the most important components of the portable device. In particular, the device includes a temperature sensor 21 integrated as part of a CMOS substrate 211 which has CMOS circuitry to control the basic functions and the basic readout of the sensor. The CMOS circuit can include for example the driver to switch the sensor and his heater on or off as well as A/D converters and amplifiers and an I2C bus controller to exchange data on an I2C bus 22. The I2C bus connects the sensors with a sensor hub 23. A further humidity sensor 24 is also linked to the I2C bus 22. The sensor hub 23 provides a control and processing unit for more complex control and read-out functions of the temperature sensor 21 based on signals sent to or extracted from, respectively, the on-chip CMOS circuitry. The sensor hub 23 also controls other auxiliary sensors such as GPS, magnetometers, accelerometers and the like.

Further control and read-out function can also be performed by the central processing unit (CPU) 25 of the portable device, which in turn has read/write access to a memory 26, which can include static or volatile memory or both as known in the art. The memory 26 typically stores the operating system of the device and can also be used to store application programs specific to the operation of the sensors of the portable device. The functions performed by the sensor hub and the sensor specific programs and program libraries as stored and executed by the CPU 25 form a temperature processing unit capable of transforming the measurements of the sensor into a result which can be displayed or otherwise communicated to the user of the portable device.

The components and executable code required to perform a dynamic compensation as described for example in the above cited '208 application can reside in the memory 26 and be executed by the CPU 25.

The memory 26 and be executed by the CPU 25 can also be used to store and run executable code for a heat compensator applied to the sensor signals to correct the temperature as directly measured to compensate for effects of the surrounding of the sensor inside the portable device or external to it.

Such a compensator includes typically a representation of a model which takes into account heat sources, heat capacities and heat conduction of elements inside the device, its housing and other factors. Based on this model and measurements relating to present status of the elements, the measured temperature value is corrected before being displayed.

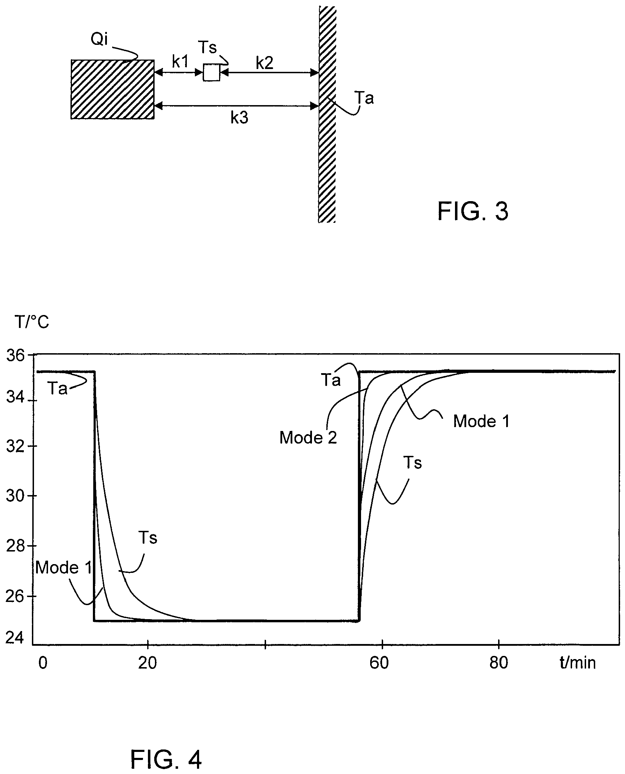

In the present example the CPU 25 and the memory 26 further include and execute a system to determine whether a change in temperature represents an upward or a downward change of the ambient temperature and to select depending on the result of such a determination either an upward or a downward change model for use in the dynamic compensation. Functions of such a system are described in more detail below while making reference to FIGs. 3 to 5 below.

In addition to the specific sensors as described above, the CPU is also connected to one or more sensors, for example the camera 271 or the microphone 272 also shown as the camera 106 and the microphone 104 of FIG. 1. Other sensors 273 such as location, acceleration and orientation sensors can be controlled by the sensor hub 23 as shown in the example. The sensors 271, 272 communicate with the CPU using their own interface units 274, 275, respectively, which operate typically in complete independence of the temperature sensor 21.

The device includes further well known input/output units 281 such as a touch sensitive display, virtual or physical keyboards and gesture tracking devices etc. The portable device as shown has a telecommunication circuit 282 comprising an antenna, driver circuits and encoding and decoding units as are well known in the art. Using such a telecommunication circuit, the device can connect to a public voice and date network and remote locations 29 as shown.

The diagrams of FIGs. 3, 4 and 5 illustrate elements of the system used to enhance the dynamic compensation. Whilst realized in form of executable code in the present example, the functional elements of the system can be implemented in other known forms of software, firmware or hardware. It should further be noted that some or all of the elements and their respective implementation can be also realized as dedicated microprocessor programmed accordingly.

As indicated in FIG. 3, a portable electronic device typically includes one or more heat sources Qi which depending on their load generate a heat flow. In the presence of such heat flows the device and its parts such as the temperature sensor achieve what is generally referred to as steady state condition or dynamic equilibrium resulting in a measured temperature Ts which is not equal the ambient temperature Ta.

The heat flows and the deviation from the ambient temperature Ta at the integrated temperature sensor can be measured using thermal sensors and or load sensors within the portable device. Using an input and a heat transfer model which models the heat flows and heat conductivities within the device and through its housing using for example coupling constants to characterize the heat flow between source Qi and the integrated temperature sensor k1, between the integrated temperature sensor and the environment k2, and between the heat source Qi and the environment k3, the heat compensation system can generate a correction of the steady state temperature Ts of the integrated temperature sensor so as to display a more correct approximation of the ambient temperature Ta.

The heat compensation system can be implemented for example by a dynamic thermal model which can be mathematically described by a differential equation system. The model may in one embodiment comprise one or more, and preferably the most relevant heat sources, and in another embodiment additionally one or more, and preferably the most relevant thermal conductivities, and in another embodiment additionally one or more, and preferably the most relevant heat capacities, as well as it comprises the temperature sensor, and it may comprise one or more optional temperature sensors that may be available in the mobile device.

The ambient temperature Ta may then be estimated from these inputs by using the following equations [1] as compensator:

$$[1]$$

$$x(k+1) = Ax(k) + Bu(k)$$
$$y(k) = Cx(k) + Bu(k)$$

with $u(k)$ denoting the inputs Ts at time step $k$, $y(k)$ denoting the output Ta, and $x(k)$ denoting an internal state vector of the compensator. $A$ is an $n$-by-$n$ matrix, $B$ an $n$-by-$m$ matrix, $C$ an $1$-by-$n$ matrix and $D$ an $1$-by-$m$ matrix, where n is the number of states that depends on the complexity of the model and $m$ the number of inputs. Typical inputs may be, for example, an intensity of a display, a time derivative of a battery charge level, a central processing unit load, or other power management information. Additional temperature sensors at hot spots of the portable electronic device may improve the compensation results.

Hence, in one embodiment, the portable electronic device is modelled as a thermal system with heat sources, and optionally with heat capacities and/or thermal conductivities. From this model, a time-discrete heat compensator according to the state space description of equations [1] is derived, that can easily be implemented on a microprocessor of the portable electronic device by using the following software code:

```
        while not stopped
  {
    u=Read_Input(); // Read input
    y=C*x+D*u; // Calculate output
    x=A*x+B*u; // State Update
    Ta = y; // Ambient Temperature = y
  }
```

The compensated temperature Ta may be displayed on the display 21, however, in the present invention the difference between the measured temperature Ts as determined directly from the sensor reading and the estimated ambient temperature Ta are used as condition for the selection of two different dynamic compensation modes for the temperature sensor.

Dynamic compensation system as such are described for example in the cited '208 application, leading to system equations [2] identical in their mathematical structure to equation [1] above:

$$[2]$$

$$x(k+1) = Ax(k) + Bu(k)$$
$$y(k) = Cx(k) + Du(k)$$

where the orders of the matrices A, B, C and D represent the order of the compensation filter and the nature of the matrix coefficient depend on the underlying model of the sensor response with their values being chosen to reflect closest the modelled system.

The exact values for a compensator built on a system of equations such as equations [2] is a matter of the model chosen and its complexity. After choosing a suitable model, the values can be determined by experiment placing for example a device in a defined temperature environment and implementing step changes of the temperature.

It is however found that the response of the sensor to a step change can be different when the temperature makes a significant step upwards as compared to a downward step of the same magnitude depending on the absolute value of the temperature and amount of heat generated through the internal sources. The heat transfer processes which determine such behaviour can be efficiently subsumed in two or more different response functions and hence in two or more sets of values for the matrix elements of A, B, C, and D, i.e.:

[2.1]

$$x(k+1) = A1x(k) + B1u(k)$$
$$y(k) = C1x(k) + D1u(k)$$

$$x(k+1) = A2x(k) + B2u(k)$$
$$y(k) = C2x(k) + D2u(k)$$

A continuous time simulation of such a dynamic compensator is shown in FIG. 4 based on

[2.2]

$$dx/dt=-1/3x + 1/3u,$$
$$y=x$$

$$dx/dt=-1/4.2x + 1/4.2u,$$
$$y=x$$

with the corresponding Laplace-transformed compensator being

[2.3]

$$y(s)/u(s) = (3s+1)/(s+1)$$

$$y(s)/u(s) = (4.2s+1)/(s+1)$$

where the second of each set of equations [2.1], [2.2], [2.3] represents the compensation mode 2 for an upward step in the ambient temperature Ta.

As shown in FIG. 4 the compensation mode 2 can accelerate the compensation significantly on an upward step of the ambient temperature Ta compared to the mode 1 used for the downward step or constant temperature cases. In the figure the sensor readings Ts are represented by the curve with the smallest gradient, with the following curve representing the temperature as dynamically compensated by with the same compensator mode 1 as applied to the downward step and the curve closest to the actual step function of the ambient temperature being the one generated as result of the compensation using mode 2.

The condition according to which the dynamic compensation switches between the modes designated by the index 1 and 2, respectively, can be chosen in different ways. In the presence of a heat compensation system as described above, the condition can be based on a function of the difference ΔT between the temperature signals as measured by the sensor and the compensated temperature signals. An example of such a function can be a threshold value of ΔT which when crossed changes the compensation mode. When the threshold value of ΔT is set to zero, the crossing of sensor temperature by the compensated value can trigger the change between the modes.

Instead of a threshold value a time gradient of ΔT can be used, thus monitoring the rate at which ΔT changes to derive a condition for the change between the modes.

It is also possible to have more than one mode for an upward step in temperature with a different set of values than mode 2, e.g. a mode 3, as represented in the equations above. In such a system, the selection between the different modes for an upward step can be made dependent on the absolute value of ΔT during the steady state conditions. In other words, the different modes represent scenarios in which the heat compensation varies and hence in which the internal heat sources play a bigger or lesser role in determining the steady state of the sensor compared to the ambient temperature. It is also possible to apply more than one mode for temperature changes to lower temperatures, wherein the selection of such modes can again be made dependent for example on the absolute value of the heat compensation.

In the absence of a heat compensation system or independent of such a system, other conditions can be used, such as the difference between the dynamically compensated temperature and the temperature as measured by the sensor or the absolute value of (initial) gradient or any other measure of the steepness of the temperature change.

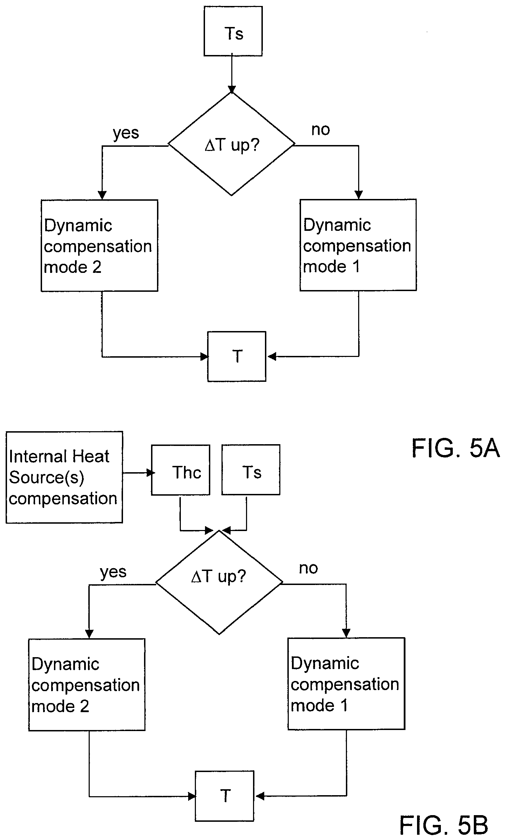

Block diagrams summarizing some elements of a system for dynamical compensating a temperature measurement in a portable device with internal heat sources are shown in FIGs. 5A and 5B. In the general variant of FIG. 5A the temperature Ts as measured by the sensor or any other signal representative of the direct sensor measurement is used in a discriminator, which in turn is used to determine whether the temperature makes a step up significantly enough for switching from a normal compensation mode 1 to the compensation mode 2 for a significant step to higher temperatures. Each compensation mode is based on a different response function of the integrated temperature sensor. The result is in both cases a dynamically compensated temperature T , which accelerates the reading of the measured temperature, which would otherwise be delayed by the sensor response.

In the more specific variant of FIG. 5B, the step of determining the mode requires as an additional input an output of a heat compensating system which is designed to remove the errors introduced through the presence of internal heat sources in the portable device from the measurement under steady state conditions and/or transient conditions. The condition under which to switch between modes 1 and 2 can then be derived from a $\Delta T$ between the directly measured and the compensated value as described above.

While there are shown and described presently preferred embodiments of the invention, it is to be understood that the invention is not limited thereto but may be otherwise variously embodied and practised within the scope of the following claims.

**Claims**

1. A portable electronic device comprising

   - one or more integrated temperature sensors (12) for measuring an ambient temperature,
   - a dynamic compensator (25,26) for reducing a difference between a sensor output (Ts) and the ambient temperature in response to a change in the ambient temperature (Ta),

   wherein the dynamic compensator (25,26) is adapted to switch depending on a predefined condition between at least one dynamic compensation mode (mode 1) for ambient temperature changes to lower temperatures and at least one different dynamic compensation mode (mode 2) for ambient temperature changes to higher temperatures.

2. The device according to claim 1, wherein dynamic compensation modes are based on different compensation filters and/or different sensor response functions.

3. The device according to claim 1 or 2, wherein the predefined condition includes a comparison between the sensor output (Ts) and a compensated value of the sensor output (The).

4. The device according to any of the preceding claims, further including a heat compensator (25,26) for compensating an error in the temperature (Ts)as measured by the sensor and wherein the predefined conditions is based on a comparison between a heat compensated value of the sensor output (Thc) and the sensor output (Ts).

5. The device according to claim 4, wherein the predefined condition is a threshold value in the difference between the heat compensated value of the sensor output (Thc) and the sensor output (Ts).

6. The device according to any of the preceding claims further comprising two or more dynamic compensation mode for ambient temperature changes to higher temperatures and/or two or more dynamic compensation mode for ambient temperature changes to lower temperatures.

7. The device according claim 6, wherein one of the two or more dynamic compensation mode for ambient temperature changes to higher temperatures or lower temperatures, respectively, are selected based on the difference between a heat compensated value of the sensor output (Thc) and the sensor output (Ts) at steady state conditions.

8. The portable electronic device according to any of the preceding claims, being selected from a group comprising:

   a mobile phone,
   a handheld computer,
   an electronic reader,
   a tablet computer,
   a game controller,
   a pointing device,
   a photo or a video camera,
   a digital music player,
   a wrist watch,
   a key fob,
   a head set,
   a picture frame
   and a computer peripheral.

**9.** A method for dynamically compensating an output (Ts) of a temperature sensor (12) integrated into a portable electronic device by reducing a difference between the sensor output (Ts) and an ambient temperature to be measured by the temperature sensor (12), comprising the steps of

> - measuring the ambient temperature using the one or more integrated temperature sensors (12), and
> - dynamically compensating the temperature measurement by switching based on a predefined condition between at least one dynamic compensation mode for ambient temperature changes to lower temperatures and at least one different dynamic compensation mode for ambient temperature changes to higher temperatures.

**10.** The method according to claim 9, further comprising the step of using as predefined condition a comparison between the sensor output (Ts) and a compensated value of the sensor output (Thc).

**11.** The method according to claim 10, wherein the predefined condition includes a comparison between a heat compensated value of the sensor output (The) and the sensor output (Ts).

**Patentansprüche**

**1.** Eine tragbare elektronische Vorrichtung umfassend:

> - einen oder mehrere integrierte Temperatursensoren (12) für die Messung einer Umgebungstemperatur,
> - einen dynamischen Kompensator (25,26) zur Reduktion einer Differenz zwischen einem Sensorausgang (Ts) und der Umgebungstemperatur als Antwort auf eine Änderung der Umgebungstemperatur (Ta),
>
> wobei der dynamische Kompensator (25, 26) derart ausgestaltet ist, dass er in Abhängigkeit von einer vordefinierten Bedingung zwischen mindestens einem dynamischen Kompensationsmodus (Modus 1) für Änderungen der Umgebungstemperatur zu niedrigeren Temperaturen hin und mindestens einem unterschiedlichen dynamischen Kompensationsmodus (Modus 2) für Änderungen der Umgebungstemperatur zu höheren Temperaturen hin schaltet.

**2.** Die Vorrichtung nach Anspruch 1, wobei dynamische Kompensationsmodi auf unterschiedliche Kompensationsfilter und/oder unterschiedliche Sensorantwortfunktionen basieren.

**3.** Die Vorrichtung nach Anspruch 1 oder 2, wobei die vordefinierte Bedingung einen Vergleich zwischen dem Sensorausgang (Ts) und einem kompensierten Wert des Sensorausgangs (Thc) einschliesst.

**4.** Die Vorrichtung nach einem der vorangehenden Ansprüche, weiter umfassend einen Wärmekompensator (25, 26) zur Kompensation eines vom Sensor gemessenen Fehlers der Temperatur (Ts) und wobei die vordefinierten Bedingungen auf einen Vergleich zwischen einem wärmekompensierten Wert des Sensorausgangs (Thc) und dem Sensorausgang (Ts) basiert.

**5.** Die Vorrichtung nach Anspruch 4, wobei die vordefinierte Bedingung ein Schwellwert der Differenz zwischen dem wärmekompensierten Wert des Sensorausgangs (Thc) und dem Sensorausgang (Ts) ist.

**6.** Die Vorrichtung nach einem der vorangehenden Ansprüche, weiter umfassend zwei oder mehrere dynamische Kompensationsmodi für Änderungen der Umgebungstemperatur zu höheren Temperaturen hin und/oder zwei oder mehrere dynamische Kompensationsmodi für Änderungen der Umgebungstemperatur zu niedrigeren Temperaturen hin.

**7.** Die Vorrichtung nach Anspruch 6, wobei einer der zwei oder mehreren Kompensationsmodi für Änderungen der Umgebungstemperatur zu höheren Temperaturen bzw. zu niedrigen Temperaturen hin basierend auf den Unterschied zwischen einem wärmekompensierten Wert des Sensorausgangs (Thc) und dem Sensorausgang (Ts) in stationärem Zustand gewählt sind.

**8.** Die tragbare elektronische Vorrichtung nach einem der vorangehenden Ansprüche, ausgewählt aus einer Gruppe umfassend:

> ein Mobiltelefon,
> einen Taschencomputer,
> ein elektronisches Lesegerät,
> ein Tablett,
> eine Spielkonsole,
> ein Zeigegerät,
> eine Photo- oder Videokamera,
> einen digitaler Musikspieler,
> eine Armbanduhr,
> einen Schlüsselanhänger,
> ein Headset,
> einen Fotorahmen,
> und einen PC.

**9.** Ein Verfahren zur dynamischen Kompensation eines Ausgangs (Ts) eines in einem tragbaren elektronischen Gerät integrierten Temperatursensors (12) indem eine Differenz zwischen einem Sensorausgang (ts) und einer vom Temperatursensor (12) zu messenden Umgebungstemperatur reduziert wird, umfassend die Schritte:

- Messen der Umgebungstemperatur unter Verwendung des einen oder der mehreren integrierten Temperatursensoren (12), und
- Kompensieren der Temperaturmessung dynamisch, indem in Abhängigkeit von einer vordefinierten Bedingung zwischen mindestens einem dynamischen Kompensationsmodus für Änderungen der Umgebungstemperatur zu niedrigeren Temperaturen hin und mindestens einem unterschiedlichen dynamischen Kompensationsmodus für Änderungen der Umgebungstemperatur zu höheren Temperaturen hin geschaltet wird.

10. Das Verfahren nach Anspruch 9, weiter umfassend den Schritt der Verwendung eines Vergleichs zwischen dem Sensorausgang (Ts) und einem kompensierten Wert des Sensorausgangs (Thc) als vordefinierte Bedingung.

11. Das Verfahren nach Anspruch 10, wobei die vordefinierte Bedingung einen Vergleich zwischen einem kompensierten Wert des Sensorausgangs (Thc) und dem Sensorausgang (Ts) einschliesst.


**Revendications**

1. Un dispositif électronique portable comprenant

- un ou plusieurs capteurs de température intégrés (12) pour mesurer une température ambiante,
- un compensateur dynamique (25, 26) pour réduire une différence entre une sortie de capteur (Ts) et la température ambiante en réponse à un changement de la température ambiante (Ta),

le compensateur dynamique (25, 26) étant adapté à commuter, dépendant d'une condition prédéfinie, entre au moins un mode de compensation dynamique (mode 1) pour des changements de la température ambiante vers des températures inférieures et au moins un mode de compensation dynamique (mode 2) pour des changements de la température ambiante vers des températures supérieures.

2. Le dispositif selon la revendication 1, des modes de compensation dynamique étant basés sur des différents filtres de compensation et/ou des différentes fonctions de réponse de capteur.

3. Le dispositif selon la revendication 1 ou 2, la condition prédéfinie incluant une comparaison entre la sortie de capteur (Ts) et une valeur compensée de la sortie de capteur (Thc).

4. Le dispositif selon l'une des revendications précédentes, incluant en outre un compensateur de chaleur (25, 26) pour compenser une erreur de la température (Ts) mesurée par le capteur et les conditions prédéfinies étant basées sur une comparaison entre une valeur de chaleur compensée de la sortie de capteur (Thc) et la sortie de capteur (Ts).

5. Le dispositif selon la revendication 4, la condition prédéfinie étant une valeur seuil de la différence entre la valeur de chaleur compensée de la sortie de capteur (Thc) et la sortie de capteur (Ts).

6. Le dispositif selon l'une des revendications précédentes, comprenant en outre deux ou plusieurs modes de compensation pour des changements de la température ambiante vers des températures supérieures et/ou deux ou plusieurs modes de compensation dynamique pour des changements de la température ambiante vers des températures inférieures.

7. Le dispositif selon la revendication 6, un des deux ou plusieurs modes de compensation dynamique pour des changements de température ambiante vers des températures supérieures ou bien des températures inférieures étant sélectionnés basé sur la différence entre une valeur de chaleur compensée de la sortie de capteur (Thc) et la sortie de capteur (Ts) dans des conditions stationnaires.

8. Le dispositif électronique portable selon l'une des revendications précédentes, étant sélectionné d'un groupe comprenant:

un téléphone portable,
un ordinateur portable,
un lecteur électronique,
une tablette,
un contrôleur de jeu,
un dispositif de pointage,
une caméra photo ou vidéo,
un lecteur de musique digital,
une montre à bracelet,
une clé fob,
une casque-micro,
un cadre de photos
et une périphérique d'ordinateur.

9. Un procédé pour compenser dynamiquement une sortie (Ts) d'un capteur de température (12) intégré dans un dispositif électronique portable en réduisant une différence entre la sortie de capteur (Ts) et une température ambiante à mesurer par le capteur de température, comprenant les étapes de

- mesurer la température ambiante en utilisant l'un ou les plusieurs capteurs de température intégrés (12), et
- compenser dynamiquement la mesure de température en commutant, basé sur une condition prédéfinie, entre au moins un mode de compensation dynamique pour des changements de la température ambiante vers des températures inférieures et au moins un mode de compensation dynamique différent pour des changements de la température ambiante vers des températures supérieures.

10. Le procédé selon la revendication 9, comprenant en outre l'étape d'utiliser comme condition prédéfinie une comparaison entre la sortie de capteur (Ts) et une valeur compensée de la sortie de capteur (Thc).

11. Le procédé selon la revendication 10, la condition prédéfinie incluant une comparaison entre une valeur de chaleur compensée de la sortie de capteur (Thc) et la sortie de capteur (Ts).

FIG. 1A

FIG. 1B

FIG. 2

FIG. 3

FIG. 4

FIG. 5A

FIG. 5B

**EP 2 796 841 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110307208 A1
- EP 1301014 A1
- EP 2392898 A1
- JP 2006105870 A